# EUROPÄISCHE PATENTSCHRIFT

(11) **EP 3 143 916 B1**
(45) Veröffentlichungstag und Bekanntmachung des Hinweises auf die Patenterteilung: **31.01.2018**
(21) Anmeldenummer: 16187831.9
(22) Anmeldetag: 08.09.2016
(51) Int. Cl.: A47J 43/28, A47J 27/62, G01K 1/02

(54) **KOCHHILFSVORRICHTUNG**
COOKING ASSISTANCE DEVICE
DISPOSITIF D'AIDE À LA CUISSON

(30) Priorität: 15.09.2015 AT 5972015
(43) Veröffentlichungstag der Anmeldung: 22.03.2017
(73) Patentinhaber: FLUXRON Solutions AG, 8580 Amriswil (CH)
(72) Erfinder: Jäckle, Benno, 9308 Lömmenschwil (CH); Reichard, Mischa, 9000 St. Gallen (CH); Heuberger, Roland, 8590 Romanshorn (CH)
(74) Vertreter: Hofmann, Ralf U.

(56) Entgegenhaltungen:
- EP-A1- 0 441 432
- EP-A1- 1 473 554
- DE-A1-102012 200 295

## Beschreibung

Die vorliegende Erfindung betrifft eine Kochhilfsvorrichtung mit einem Temperaturfühler und einer elektronischen Schaltungsanordnung, der ein Ausgabewert des Temperaturfühlers zugeführt ist, wobei mittels des Temperaturfühlers eine Temperatur eines von einer Kochstelle aufheizbaren Wasserbads erfassbar ist und von der elektronischen Schaltungsanordnung Daten zur Regelung der Temperatur des Wasserbads drahtlos an eine Empfangseinheit übertragbar sind, und wobei die Kochhilfsvorrichtung als selbstaufrichtender Schwimmer ausgebildet ist. Eine derartige Kochhilfsvorrichtung ist aus der Druckschrift EP 0 441 432 A1 bekannt (siehe die Fig. 2A und 2B). Die Zubereitung von Speisen in einem erwärmten Wasserbad ermöglicht aufgrund des vorteilhaften Wärmeaustauschs mit dem Gargut eine schonende und gleichmäßige Garung des Garguts bei längeren Garzeiten auf relativ niedrigen Gartemperaturen. Vor allem in Gastronomiebetrieben findet das als Sous-Vide-Garen bezeichnete Vakuumgaren vermehrt Eingang. Dabei wird das Gargut, z.b. Fleisch, Fisch oder Gemüse, in einem Vakuumbeutel aus Kunststoff bei Wassertemperaturen von unter 100°C gegart. Ein Vorteil des Vakuumgarens liegt darin, dass durch das Vakuumieren bedeutend weniger flüchtige Geschmacksstoffe, Aromen und Flüssigkeit aus dem Gargut austreten können. Insbesondere bei Anwendungsfällen mit rasch bereitzustellenden Speisen oder einer großen Vielfalt unterschiedlicher Speisen kann im Wasserbad bereits vorgegartes Gargut bereitgehalten werden. Vor dem Servieren der Speise kann das Gargut zur Ausbildung einer Kruste kurz scharf angebraten werden.

Da jedes Gargut andere, relativ genau einzuhaltende Kerntemperaturen für eine optimale Zubereitung benötigt, muss die Temperatur des Wasserbads auf die gewünschte Temperatur geregelt und gehalten werden. Hierzu sind speziell für den Einsatz zum Vakuumgaren gefertigte Geräte mit integrierten Temperaturfühlern bekannt. Ist eine große Anzahl von unterschiedlichem Gargut bereitzuhalten, müssen diese Geräte mit speziellen hierzu benötigten Wasserbädern in mehrfacher Ausführung in Großküchen bereitgehalten werden, was einerseits teuer ist und andererseits viel Platz in Anspruch nimmt.

Bekannt sind im weiteren Geräte, bei denen die Erwärmung von Wasser mittels eines Tauchsieders erfolgt. Da sich hierbei ohne weitere Maßnahmen eine Temperaturschichtung ausbilden kann, bei der sich wärmere Anteile des Wassers aufgrund der geringeren Dichte oberhalb von kälteren Anteilen von Wasser befinden, ist der Ort der Temperaturmessung für einen Rückschluss auf die tatsächliche Temperatur des Garguts entscheidend. Um dieses Problem bei der Erwärmung des Wasserbads mittels Tauchsiedern zu vermeiden, werden häufig Umwälzpumpen eingesetzt, um eine Temperaturschichtung zu verhindern. Die Umwälzpumpen können in Sous-Vide-Geräte integriert sein und bilden mit einem Tauchsieder, Temperatursensor und einer Regelelektronik eine Einheit, die beispielsweise am Wasserbad eingehängt wird.

Um einem Nutzer die Kontrolle der Temperatur eines Wasserbades für Sous-Vide-Garen zu ermöglichen, sind schwimmende Thermometer bekannt, von denen der Benutzer die angezeigte Temperatur ablesen kann.

In der EP 1 239 703 A2 ist eine Kochhilfsvorrichtung gezeigt, wobei der Temperaturfühler an einem Schaft angebracht ist, an dem verschiedene Küchenutensilien, beispielsweise ein Kochlöffel, festgelegt werden können. Die Kochhilfsvorrichtung mit dem angebrachten Kochlöffel ist unter Berührung des Bodens des Gefäßes in das Kochgefäß eingestellt. In anderen Ausführungsformen ist die Kochhilfsvorrichtung bei abgenommenem Küchenutensil durch eine Öffnung in einem Deckel eines Kochgefäßes eingesteckt oder am Rand des Gefäßes eingehängt. Die Messung erfolgt je nach Position des Temperaturfühlers relativ zum Kochgefäß an unterschiedlichen Stellen. Ähnliche Einrichtungen gehen auch aus DE 10 2013 218 785 A1 und der DE 101 17 545 A1 hervor, wobei in letzterer Schrift der Deckel des Kochtopfs mit einer

Sensoreinheit zur Erfassung der Temperatur versehen ist.

Eine Kochhilfsvorrichtung geht aus der EP 1 879 428 A1 hervor. Die schwimmende Kochhilfsvorrichtung verhindert, dass der Temperatursensor auf den Gefäßboden des Kochtopfs absinkt. Ein RFID-Chip der elektrischen Schaltungsanordnung und eine Antenne der Kochhilfsvorrichtung sind in einem kugelförmig dargestellten Schwimmkörper aus schwimmfähigem Material eingebettet.
Aufgabe der Erfindung ist es, eine vorteilhafte Kochhilfsvorrichtung der eingangs genannten Art bereitzustellen, welche eine zuverlässige und genaue Erfassung der Temperatur des Wasserbads ermöglicht.
Erfindungsgemäß gelingt dies durch eine Kochhilfsvorrichtung mit den Merkmalen des Anspruchs 1.

Die Kochhilfsvorrichtung gemäß der Erfindung ist so ausgebildet, dass sich die elektronische Schaltungsanordnung in einem selbstaufgerichteten Zustand der im Wasserbad schwimmenden Kochhilfsvorrichtung vollständig oberhalb der Wasserlinie der Kochhilfsvorrichtung befindet.

Da die Kochhilfsvorrichtung als Schwimmer ausgebildet ist, schwimmt die Kochhilfsvorrichtung in einem Wasserbad und sinkt nicht auf deren Grund. Bei der Erwärmung eines Wasserbads auf einer Kochstelle, z. B. der Kochplatte eines Herds, kann daher ein beliebiger mit Wasser befüllter Topf zur Ausbildung des aufheizbaren Wasserbads verwendet werden, der bis zu einer beliebigen Höhe mit Wasser befüllt ist. Beim Erwärmen von Wasser mittels einer Kochstelle (= Küchenherd) bildet sich im auf der Kochstelle abgestellten Kochgefäß eine natürliche Strömungsbewegung im Wasserbad aus, bei der am Boden des Kochgefäßes erwärmtes Wasser zentral im Kochgefäß bis zur Wasseroberfläche aufsteigt. Das erhitzte Wasser strömt in der Nähe der Wasseroberfläche radial nach außen und sinkt im äußeren Bereich des Wasserbads ab. Eine Temperaturschichtung tritt bei der Erhitzung mit einer Kochstelle, durch den Eintrag von Wärme von unten, nicht auf. Durch die schwimmende Kochhilfsvorrichtung kann die exakte Temperatur des Wasserbads in einem Bereich in der Nähe der Wasseroberfläche gemessen werden, unabhängig davon, wieviel Wasser in den Topf eingefüllt ist.

Da die Kochhilfsvorrichtung als selbstaufrichtender Schwimmer ausgebildet ist, richtet sich die Kochhilfsvorrichtung aus einer beliebigen Schräglage, in welcher die Kochhilfsvorrichtung in das Wasserbad eingebracht wird, wieder von selbst in einen definierten selbstaufgerichteten, stabilen Zustand aus. Dadurch kann die Kochhilfsvorrichtung vom Endbenutzer einfach in das Wasserbad geworfen werden, ohne auf eine bestimmte Einbringungsposition zu achten, wobei sich der Temperaturfühler nach der selbsttätigen Einnahme der aufgerichteten Lage der Kochhilfsvorrichtung an der vorgegebenen Position unterhalb der Wasseroberfläche befindet. Gerade in gewerblichen Küchen ist eine derartig benutzerfreundliche Ausbildung von besonderer Bedeutung.

Die elektronische Schaltungsanordnung befindet sich im selbstaufgerichteten Zustand der im Wasserbad schwimmenden Kochhilfsvorrichtung vollständig oberhalb der Wasserlinie der Kochhilfsvorrichtung. Als Wasserlinie wird jene Linie bezeichnet, in der der Wasserspiegel die äußere Oberfläche der Kochhilfsvorrichtung berührt. In anderen Worten entspricht die Wasserlinie der Schnittlinie zwischen der Ebene, in welcher die Wasseroberfläche des Wasserbads liegt, und der äußeren Oberfläche der Kochhilfsvorrichtung. Da sich die elektronische Schaltungsanordnung vollständig oberhalb der Wasserlinie der Kochhilfsvorrichtung befindet, können die Bauteile der elektronischen Schaltungsanordnung, insbesondere Halbleiter-Bauteile, günstigerweise vor der Einwirkung durch die Wärme des Wasserbads geschützt werden. Besonders günstig ist es in diesem Zusammenhang, wenn sich die elektronische Schaltungsanordnung zumindest in einem auf die vertikale Richtung bezogenen Abstand von mehr als 1 cm über der Wasserlinie befindet.

Vorzugsweise ist die Kochhilfsvorrichtung auch zur Erfassung von Temperaturen von bis zu mehr als 100°C geeignet, besonders bevorzugt von bis zu mehr als 180°C. Es kann hierbei vorteilhafterweise vorgesehen sein, dass mit dem Temperaturfühler der Kochhilfsvorrichtung auch die Temperatur eines von der Kochstelle aufheizbaren Ölbads erfasst werden kann. Es ist also denkbar, mit der Kochhilfsvorrichtung auch die Temperatur von Speiseöl, z. B. Kokosöl, Sonnenblumenöl etc. zu erfassen, welches zur Erhitzung von Gargut verwendet wird. Es treten hierbei wesentlich höhere Temperaturen als im Wasserbad auf, üblicherweise im Bereich von 140°C bis 180°C. Auch in diesem Anwendungsgebiet ist günstigerweise vorgesehen, dass die Kochhilfsvorrichtung im Ölbad als selbstaufrichtender Schwimmer ausgebildet ist. Die elektronische Schaltungsanordnung befindet sich im selbstaufgerichteten Zustand der im Ölbad schwimmenden Kochhilfsvorrichtung wiederum zumindest teilweise, vorzugsweise vollständig, oberhalb der Linie, in der der Ölspiegel die äußere Oberfläche der Kochhilfsvorrichtung berührt. Es wird dadurch wesentlich erleichtert, bzw. überhaupt erst ermöglicht, dass die Kochhilfsvorrichtung den beim Einsatz im Ölbad auftretenden Temperaturbelastungen standhalten kann.

In einer vorteilhaften Ausgestaltung ist die Kochhilfsvorrichtung nach Art eines Stehaufmännchens ausgebildet. D. h., dass sich die Kochhilfsvorrichtung beim Ablegen auf einer ebenen, horizontalen Unterlage von selbst in einen aufgerichteten Zustand (= Ruhezustand) aufrichtet. Jede Veränderung der Lage der Kochhilfsvorrichtung abweichend vom aufgerichteten Zustand führt dann zu einem Anheben des Schwerpunktes, sodass sich die Kochhilfsvorrichtung durch das wirkende Schwerkraftfeld der Erde von selbst wieder aufrichtet. Dadurch kann die Kochhilfsvorrichtung auch auf den Boden eines leeren Kochgefäßes ohne besondere Beachtung der Lage der Kochhilfsvorrichtung platziert werden, da sie sich von selbst aufrichtet. Die elektronische Schaltungsanordnung kann hierbei günstigerweise von der tiefsten Stelle der Kochhilfsvorrichtung, mit der diese im aufgerichteten Zustand auf der Unterlage aufliegt, in vertikaler Richtung beabstandet sein, also höher liegen, vorzugsweise um mindestens 2 cm. Die elektronische Schaltungsanordnung kann dadurch von der Hitze des Topfbodens geschützt werden.

Bezogen auf den aufgerichteten Zustand, den die Kochhilfsvorrichtung auf einer Unterlage einnimmt, ist der Temperaturfühler bevorzugt im Bereich der tiefsten Stelle der Kochhilfsvorrichtung angeordnet. Der Temperaturfühler liegt hierbei günstigerweise an der ebenen, horizontalen Unterlage, insbesondere am Boden des Kochgefäßes an. Es kann daher die Temperatur des Bodens eines Kochgefäßes ermittelt werden. Dadurch kann mit der Kochhilfsvorrichtung ein zu geringer Wasserstand des Wasserbads erfasst werden, da durch die Einwirkung der Kochstelle der Boden des Kochgefäßes bedeutend heißer ist als die Temperatur des Wasserbads. Andererseits kann die Temperatur des Bodens eines Kochgefäßes geregelt werden, um beispielsweise einen Bratvorgang bei einer gewünschten Temperatur durchzuführen. Das Kochgefäß kann hierbei leer sein oder der Boden kann mit einem Ölfilm bedeckt sein. Die Kochhilfsvorrichtung kann hierbei günstigerweise zur Erfassung von Temperaturen des Bodens des Kochgefäßes von bis zu mehr als 150°C, vorzugsweise von bis zu mehr als 200°C ausgelegt sein. Beispielsweise kann ein Temperaturbereich bis 280°C vorgesehen sein.

Die Kochhilfsvorrichtung weist günstigerweise zumindest ein Energiespeicherelement auf. Das Energiespeichelement versorgt die elektronische Schaltungsanordnung und gegebenenfalls den Temperaturfühler mit elektrischer Energie. Bevorzugterweise ist das Energiespeicherelement der Kochhilfsvorrichtung ein aufladbarer Akkumulator oder ein Kondensator. Das Energiespeicherelement der Kochhilfsvorrichtung kann dann zum Beispiel mittels einer externen Ladestation, vorzugsweise drahtlos, aufgeladen werden. In alternativen Ausgestaltungsformen kann das Energiespeicherelement auch eine vom Endbenutzer aus der Kochhilfsvorrichtung entnehmbare und einsatzbare Batterie, gegebenenfalls wieder aufladbare Akku-Batterie, sein.

Das Energiespeicherelement befindet sich im selbstaufgerichteten Zustand der im Wasserbad schwimmenden Kochhilfsvorrichtung vorteilhafterweise oberhalb der Wasserlinie der Kochhilfsvorrichtung, bevorzugt auch oberhalb der elektronischen Schaltungsanordnung. Dadurch können Energiespeicherelemente, welche üblicherweise besonders temperaturempfindlich sind, vor der Einwirkung der Wärme des Wasserbads geschützt werden. Auch bei einer Verwendung der Kochhilfsvorrichtung in einem Ölbad befindet sich das Energiespeicherelement im selbstaufgerichteten Zustand einer in einem Ölbad schwimmenden Kochhilfsvorrichtung vorteilhafterweise oberhalb der Linie, in der der Ölspiegel die äußere Oberfläche der Kochhilfsvorrichtung berührt.

Eine mögliche Ausgestaltungsform sieht vor, dass die Kochhilfsvorrichtung eine Energy-Harvesting-Einrichtung zur Versorgung der elektronischen Schaltungsanordnung und/oder des Energiespeicherelements mit elektrischer Energie aufweist. Energy-Harvesting-Einrichtungen dienen der Gewinnung von elektrischer Energie von außerhalb der Kochhilfsvorrichtung vorhandenen Energiequellen in der Umgebung. Dabei kann es sich insbesondere um magnetische Streufelder von Wirbelströmen eines Induktionskochfelds handeln. Aus diesen kann mittels in der Kochhilfsvorrichtung angeordneten Ladespulen elektrische Energie gewonnen werden. Andere Energy-Harvesting-Einrichtungen, beispielsweise zur Gewinnung von elektrischer Energie aus der Umgebungstemperatur, sind denkbar und möglich. Solche sind in anderen Bereichen der Technik bekannt. Im Falle des Einsatzes einer Energy-Harvesting-Einrichtung könnte es grundsätzlich möglich sein, auf ein Energiespeicherelement zu verzichten. Ein solches ist aber dennoch vorteilhaft, um eine lückenlose Energieversorgung zu gewährleisten und/oder auftretende Spitzen im Energieverbrauch abzupuffern.

Weitere Merkmale und Einzelheiten der Erfindung werden anhand des in den Fig. gezeigten Ausführungsbeispiels einer Kochhilfsvorrichtung erläutert. Es zeigen:
- Fig. 1: eine Ansicht einer erfindungsgemäßen Kochhilfsvorrichtung in schematischer Darstellung;
- Fig. 2: die Anwendung der Kochhilfsvorrichtung gemäß Fig. 1 (beim Sous-Vide Garen);
- Fig. 3: die vergrößerte Ansicht des Kochgefäßes gemäß Fig. 2 mit der Kochhilfsvorrichtung im selbstaufgerichteten Zustand und - in gestrichelten Linien - in einer vom selbstaufgerichteten Zustand abweichenden Schräglage, und
- Fig. 4: die Kochhilfsvorrichtung gemäß Fig. 1 im aufgerichteten Zustand und - in gestrichelten Linien - einer davon abweichenden Schräglage beim Ablegen auf einem Boden eines Kochgefäßes.

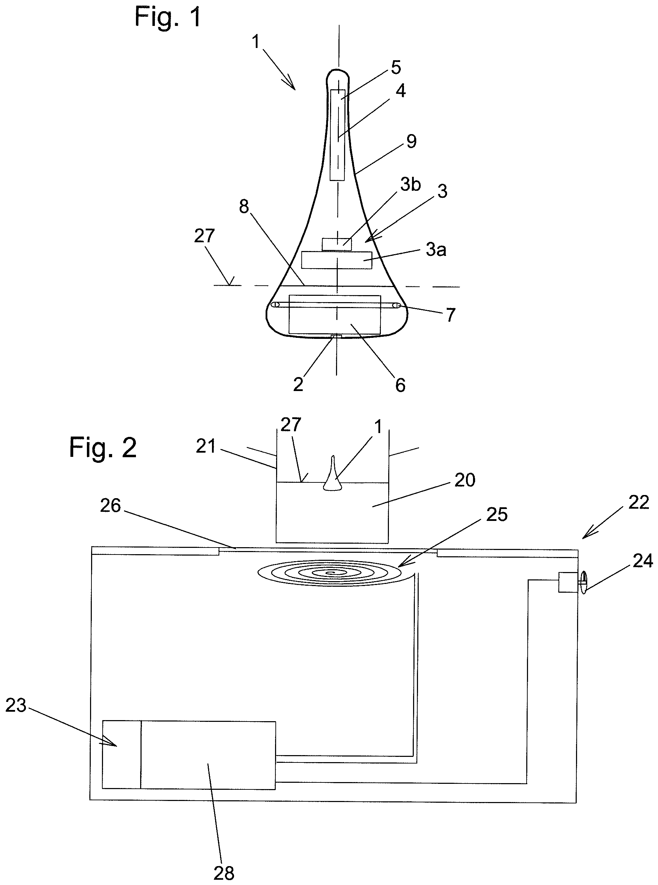

Die als Schwimmer ausgebildete Kochhilfsvorrichtung 1 dient der Erfassung und Übermittlung der vom Temperaturfühler 2 der Kochhilfsvorrichtung 1 gemessenen Temperatur. Bei einem Einsatz in einem Wasserbad 20, z. B. beim in Fig. 2 schematisch dargestellten Sous-Vide Garen welches weiter unten noch näher erläutert wird, schwimmt die Kochhilfsvorrichtung 1 im bis zu 100°C heißen Wasserbad 20 und kann sich im Wasserbad 20 frei bewegen. Insbesondere führen keine Kabel oder Befestigungsvorrichtungen von der Kochhilfsvorrichtung 1 zur Befestigung im oder am das Wasserbad 20 enthaltenden Kochgefäß 21 weg.

Der Temperaturfühler 2 ist mit nicht dargestellten elektrischen Leitungen mit einer schematisch angedeuteten elektronischen Schaltungsanordnung 3 zur Erfassung des Ausgabewertes des Temperaturfühlers 2 verbunden. Die elektronische Schaltungsanordnung 3 weist Halbleiterbauteile, wie z.B. Analog-/Digitalwandler bei Verwendung analoger Temperaturfühler, Mikrocontroller zur Messwerterfassung, Speicherbauteile etc. auf. Ein Messwert-Erfassungs- und Verarbeitungsmodul ist mit 3a bezeichnet.

Die elektronische Schaltungsanordnung 3 weist im Weiteren ein Kommunikationsmodul 3b auf, welches der drahtlosen Kommunikation mit einer später noch zu erläuternden Empfangseinheit 23 einer Kochstelle 22 dient.

Die Kochhilfsvorrichtung 1 ist mit einem Energiespeicherelement 5 ausgestattet, aus dem von der elektronischen Schaltungsanordnung 3 Energie für deren Betrieb beziehbar ist.

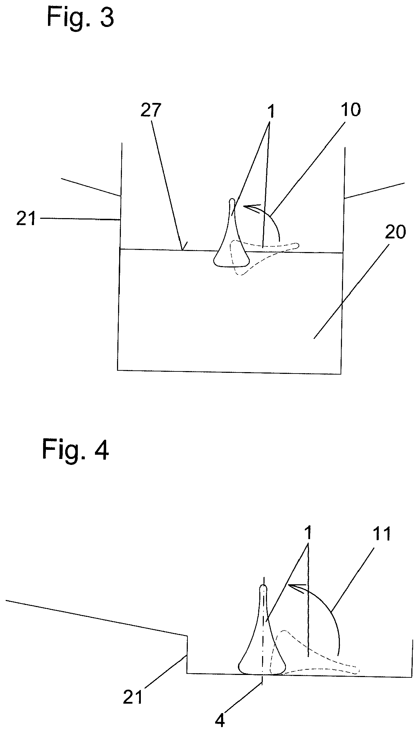

Die Kochhilfsvorrichtung 1 ist als selbstaufrichtender Schwimmer ausgebildet, welcher im selbstaufgerichteten Zustand eine stabile Lage einnimmt. Bei einer relativ zum selbstaufgerichteten Zustand ausgelenkten Schräglage, z.B. beim Hineinwerfen der Kochhilfsvorrichtung 1 in das Wasserbad 20, richtet sich die Kochhilfsvorrichtung 1 von selbst in den selbstaufgerichteten Zustand auf, vgl. Fig. 1 und die in durchgezogener Linie dargestellte Kochhilfsvorrichtung 1 in Fig. 3. Zur Aufrichtung der Kochhilfsvorrichtung 1 in den selbstaufgerichteten Zustand wirkt in der Schräglage der Kochhilfsvorrichtung 1 (= in unterbrochener Linie dargestellte Lage der Kochhilfsvorrichtung gemäß Fig. 3) ein aufrichtendes Moment auf die Kochhilfsvorrichtung 1 ein. Das Aufrichten der Kochhilfsvorrichtung 1 aus der Schräglage ist in Fig. 3 durch einen Pfeil in Bewegungsrichtung 10 angedeutet. Im Ausführungsbeispiel unterstützt ein Zusatzgewicht 6 die selbständige Aufrichtung der Kochhilfsvorrichtung 1.

In Fig. 3 ist als Schräglage eine Verdrehung von weniger als 90° um eine horizontale Achse gegenüber dem selbstausgerichteten Zustand dargestellt. Das Aufrichten erfolgt aber auch für Verdrehungen von mehr als 90° um eine beliebige horizontale Achse, vorzugsweise auch bei Verdrehungen bis zu 180°.

Es ist bekannt, schwimmende Gegenstände selbstaufrichtend auszubilden. Insbesondere bei Schiffen sind derartige Ausbildungen als Selbstaufrichter bekannt. Um Selbstaufrichter auszubilden geht es insbesondere darum, dass bei Auslenkung des Selbstaufrichters (hier der Kochhilfsvorrichtung 1) aus dem selbstaufgerichteten Zustand zwischen der Gewichtskraft und der Auftriebskraft ein Hebelarm gebildet wird, der ein aufrichtendes Moment hervorruft. Ein solcher Hebelarm kann bis zu einer Verdrehung von bis zu 180° um eine horizontale Achse wirken, um den Selbstaufrichter aufzurichten. Bei einer Verdrehung von genau 180° kann theoretisch ein labiles Gleichgewicht vorliegen, welches aber bei der kleinsten Störung aufgehoben wird, sodass der Selbstaufrichter sich von selbst in den selbstaufgerichteten Zustand aufrichtet.

Der Temperaturfühler 2 der Kochhilfsvorrichtung 1 ist, bezogen auf den selbstaufgerichteten Zustand den die im Wasserbad 20 schwimmende Kochhilfsvorrichtung 1 einnimmt, unter der Wasserlinie 8 der Kochhilfsvorrichtung 1 angeordnet. Die Wasserlinie 8 liegt dabei in einer Ebene mit dem Wasserspiegel 27, an der Stelle, an der der Wasserspiegel 27 die äußere Oberfläche der Kochhilfsvorrichtung 1 berührt, vgl. Fig. 1.

Die elektronische Schaltungsanordnung 3 und das Energiespeicherelement 5 befinden sich im selbstaufgerichteten Zustand der im Wasserbad 20 schwimmenden Kochhilfsvorrichtung 1 vollständig oberhalb der Wasserlinie 8 der Kochhilfsvorrichtung 1. Der Vertikalabstand der elektronischen Schaltungsanordnung 3 von der Wasserlinie 8 beträgt mehr als 1 cm. Dadurch sind temperaturempfindliche Bauteile, insbesondere Halbleiter-Bauteile, der elektronischen Schaltungsanordnung 3 und/oder temperaturempfindliche Energiespeicherelemente 5 vor der Einwirkung der Wärme des Wasserbads 20 geschützt.

Die Kochhilfsvorrichtung 1 ist vorzugsweise auch zur Erfassung der Temperatur eines von der Kochstelle 22 aufheizbaren Ölbads geeignet. Die Temperatur des mit Speiseöl aufgefüllten Ölbads kann bis zu 180°C betragen. Gerade bei der Anwendung im Ölbad ist es günstig, wenn sich die elektronische Schaltungsanordnung 3, und vorzugsweise auch das Energiespeicherelement 5, im selbstaufgerichteten Zustand der im Ölbad schwimmenden Kochhilfsvorrichtung 1 vollständig oberhalb der Linie befindet, in der der Ölspiegel die äußere Oberfläche der Kochhilfsvorrichtung 1 berührt. Da Speiseöl in der Regel eine geringere Dichte als Wasser aufweist, taucht die Kochhilfsvorrichtung 1 im Ölbad tiefer ein. Der Abstand der elektronischen Schaltungsanordnung 3 von der Linie in der der Ölspiegel die äußere Oberfläche der Kochhilfsvorrichtung 1 berührt, beträgt aber auch im Ölbad günstigerweise mehr als 1 cm, um die temperaturempfindlichen Bauteile der Kochhilfsvorrichtung 1 vor der Einwirkung der Hitze des Ölbads zu schützen.

Die Kochhilfsvorrichtung 1 ist außerdem günstigerweise nach Art eines Stehaufmännchens ausgebildet. Beim Ablegen der Kochhilfsvorrichtung 1 auf einer ebenen, horizontalen Unterlage in einer beliebigen Lage, z.B. auf einem ebenen und horizontal liegenden Boden eines, z.B. als Bratpfanne ausgebildeten, Kochgefäßes 21, richtet sich diese damit von selbst in einen aufgerichteten Zustand auf (= der Fig. 4 in durchgezogener Linie gezeigte Ruhezustand der Kochhilfsvorrichtung 1). Jede vom Ruhezustand abweichende Schräglage der Kochhilfsvorrichtung 1 (= in unterbrochener Linie dargestellte Lage der Kochhilfsvorrichtung 1 gemäß Fig. 4) führt zu einem Anheben des Gewichtsschwerpunktes, sodass sich die Kochhilfsvorrichtung 1 durch die wirkende Gravitation von selbst wieder aufrichtet. Das Aufrichten der Kochhilfsvorrichtung 1 aus einer Schräglage beim Ablegen auf einer ebenen Unterlage ist in Fig. 4 durch einen Pfeil in Bewegungsrichtung 11 angedeutet.

Im Ausführungsbeispiel ist die Kochhilfsvorrichtung 1 rotationssymmetrisch ausgebildet. Im aufgerichteten Zustand (= Ruhezustand) der Kochhilfsvorrichtung 1 ist die Längsachse 4 der rotationssymmetrischen Kochhilfsvorrichtung 1 in vertikaler Richtung ausgerichtet, vgl. Fig. 4. Die Kochhilfsvorrichtung 1 könnte in einer anderen Ausgestaltung auch asymmetrisch ausgebildet sein.

Vorzugsweise ist vorgesehen, dass im aufgerichteten Zustand (=Ruhezustand), in welchen sich die Kochhilfsvorrichtung 1 beim Ablegen auf einem ebenen, horizontalen Boden des Kochgefäßes 21 aufrichtet, der Temperaturfühler 2 im Bereich der tiefsten Stelle der Kochhilfsvorrichtung 1 angeordnet ist, und den Boden des Kochgefäßes 21 berührt. Dadurch ist gewährleistet, dass die Temperatur des Bodens des Kochgefäßes 21 mit der in das Kochgefäß 21 eingebrachten Kochhilfsvorrichtung 1 zuverlässig gemessen werden kann. Das Kochgefäß 21 kann hierbei leer sein oder der Boden kann mit Flüssigkeit, insbesondere Öl, bedeckt sein, um eine Speise anzubraten. Es kann sich dabei um einen Flüssigkeitsfilm, insbesondere Ölfilm, geringer Höhe oder um eine dickere Flüssigkeitsschicht, insbesondere Ölschicht, handeln. Günstigerweise richtet sich die Kochhilfsvorrichtung 1 sowohl bei einem leeren Kochgefäß 21 als auch bei einem in beliebiger Höhe (bei der die Kochhilfsvorrichtung 1 noch nicht schwimmt) mit Flüssigkeit, insbesondere Wasser oder Öl, gefüllten Kochgefäß 21 aus einer beliebigen Lage, in der die Kochhilfsvorrichtung 1 in das Kochgefäß 21 eingelegt wird, in den aufgerichteten Zustand auf.

Bezogen auf den aufgerichteten Zustand, in welchen sich die Kochhilfsvorrichtung 1 beim Aufliegen auf einer ebenen Unterlage von selbst aufrichtet, beträgt der Vertikalabstand der elektronischen Schaltungsanordnung 3 von der tiefsten Stelle der Kochhilfsvorrichtung 1 mindestens 2 cm. Dadurch sind die Halbleiter-Bauteile der elektronischen Schaltungsanordnung 3 vor der direkten Einwirkung von Wärme des erhitzten Bodens eines Kochgefäßes 21 geschützt. Die erfassbare Temperatur des Bodens des Kochgefäßes 21 kann z.B. im Bereich von bis zu 280°C liegen.

Im Ausführungsbeispiel schließt der Temperaturfühler 2 mit der Außenoberfläche des Gehäuses 9 der Kochhilfsvorrichtung 1 bündig ab, wobei der Temperaturfühler 2 das Gehäuse 9 durchdringt. Dadurch kann die Temperatur zuverlässig gemessen und ein plötzlicher Temperaturanstieg, z.B. infolge der Berührung des Bodens des Kochgefäßes 21, rasch erfasst werden. Der Temperaturfühler 2 kann hierzu günstigerweise ein Gehäuseteil mit guten Wärmeleitungseigenschaften, z.B. eine metallischen Hülse, aufweisen mit welchem ein Sensorelement des Temperaturfühlers 2 wärmeleitend verbunden ist. In anderen Ausgestaltungen könnte der Temperaturfühler 2 auch ein als, vorzugsweise metallisches, Kontaktstück ausgebildetes Gehäuseteil aufweisen, an welchem das Sensorelement wärmeleitend festgelegt ist. Es ist aber auch denkbar und möglich, dass der Temperaturfühler 2 im Innenraum der Kochhilfsvorrichtung 1 angeordnet ist, wobei dann das Gehäuse 9 zumindest im Bereich des Temperaturfühlers 2 eine ausreichende Wärmeleitfähigkeit und/oder eine geringere Wandstärke aufweist. Auch dadurch könnte die Temperatur des Bodens des Kochgefäßes 21 erfasst werden.

Der Temperaturfühler 2 könnte in einer anderen Ausführungsform auch über das Gehäuse 9 der Kochhilfsvorrichtung 1 hervorstehen, vorzugsweise nur geringfügig. Auch dann richtet sich die Kochhilfsvorrichtung 1 beim Ablegen auf einer ebenen Unterlage günstigerweise von selbst in einen aufgerichteten Zustand auf. Das Aufrichten kann dabei durch den vorstehenden Temperaturfühler 2 in einer Lage begrenzt sein, in welcher die Längsachse 4 der Kochhilfsvorrichtung 1 noch geneigt zur Vertikalen steht. Hierbei können verschiedene solche Lagen eingenommen werden, in denen die Längsachse 4 jeweils auf dem Mantel eines gedachten Kegels liegt. Es wird dann die Gesamtheit dieser Lagen als aufgerichteter Zustand im Sinne der vorherigen Beschreibung angesehen.

Das Sensorelement des Temperaturfühlers 2 kann ein hinlänglich bekannter Analogsensor oder ein Digitalsensor sein. Die Messauflösung des Temperaturfühlers 2 ist zumindest im Bereich unter 100°C kleiner als 0,5°C, vorzugsweise 0,1°C. Der Temperaturfühler weist im Ausführungsbeispiel einen nach oben begrenzten Messbereich von zumindest 280°C auf.

Im Ausführungsbeispiel weist die Kochhilfsvorrichtung 1 eine Energy-Harvesting-Einrichtung zur Versorgung der elektronischen Schaltungsanordnung 3 mit elektrischer Energie auf. Im dargestellten Anwendungsfall dient die Ladespule 7 der Energy-Harvesting-Einrichtung der Gewinnung elektrischer Energie aus magnetischen Streufeldern von Wirbelströmen eines Induktionskochfelds einer Kochstelle 22. Diese beim Beheizen eines Kochgefäßes 21 mittels Induktionsspulen erzeugten Wirbelströme können neben der Erhitzung des Kochgefäßes 21 auch zur Versorgung der elektronischen Schaltungsanordnung 3 mit elektrischer Energie während des Betriebs des Kochhilfsvorrichtung 1 verwendet werden. Das bereits erwähnte Zusatzgewicht 6 besteht im Ausführungsbeispiel aus einem Ferritring. Der Ferritring bündelt die Wirbelströme und steigert den Wirkungsgrad der Ladespule 7 der Energy-Harvesting-Einrichtung.

Das Energiespeicherelement 5 gewährleistet die Energieversorgung der elektronischen Schaltungsanordnung 3 hierbei insbesondere während Betriebspausen der Kochstelle 22. Hierzu kann das Energiespeicherelement 5 als aufladbarer Akkumulator oder als Kondensator, insbesondere als Superkondensator, ausgebildet sein. Wenn gewährleistet ist, dass die Energy-Harvesting-Einrichtung immer, wenn eine Temperaturmessung und -übermittlung gewünscht ist, ausreichend Energie zur Verfügung stellt, kann das Energiespeicherelement 5 auch entfallen.

Abweichend vom dargestellten Ausführungsbeispiel ist es in einer weiteren Ausgestaltung der Kochhilfsvorrichtung 1 auch möglich, auf eine Energy-Harvesting-Einrichtung zu verzichten und ausschließlich ein Energiespeicherelement 5 zur Versorgung der elektronischen Schaltungsanordnung 3 mit elektrischer Energie vorzusehen. Es könnte hierbei die im Ausführungsbeispiel dargestellte Ladespule 7 zum Aufladen des Energiespeicherelements 5 mittels einer berührungslosen Ladeeinrichtung vorgesehen sein. Die Aufladung erfolgt hierbei außerhalb der Betriebszeiten der Kochhilfsvorrichtung 1. Andererseits könnte das Energiespeicherelement 5 auch eine vom Endbenutzer aus der Kochhilfsvorrichtung 1 entnehmbare und einsetzbare Batterie sein.

Die elektronische Schaltungsanordnung 3 und das vorzugsweise vorhandene Energiespeicherelement 5, sowie, soweit vorhanden, die Ladespule 7 und das Zusatzgewicht 6, vorzugsweise auch der Temperaturfühler 2, sind vollständig im Innenraum des Gehäuses 9 der Kochhilfsvorrichtung 1 angeordnet. Das Gehäuse 9 der Kochhilfsvorrichtung 1 ist vorzugsweise stoßfest und flüssigkeitsdicht ausgebildet. Zumindest in einem Bereich, der an die im aufgerichteten Zustand tiefste Stelle angrenzt, ist das Gehäuse 9 günstigerweise für einen Temperaturbereich von bis zu zumindest 280°C ausgelegt.

Das Gehäuse 9 der Kochhilfsvorrichtung 1 besteht aus einem hygienischen und lebensmitteltauglichen Material, wobei die äußere Oberfläche des Gehäuses 9 günstigerweise spaltfrei ausgebildet ist, um eine schnelle Reinigung zu ermöglichen. Die äußere Oberfläche des Gehäuses 9 ist vorzugsweise frei von Vertiefungen, in welchen sich ansonsten Schmutz ansammeln könnte.

Die Kochhilfsvorrichtung 1 könnte einen abgedichteten Schalter zur Aktivierung der Temperaturmessung aufweisen. Es ist auch denkbar, dass die elektronische Schaltungsanordnung einen Beschleunigungssensor aufweist. Durch Erfassung einer vom Endbenutzer aufgebrachten Bewegung der Kochhilfsvorrichtung 1 oder ein Schütteln der Kochhilfsvorrichtung 1 könnte eine Aktivierung der Kochhilfsvorrichtung 1 erfolgen. In einer anderen Ausgestaltung könnte die Aktivierung mittels eines Gegenstücks, z. B. eines Magnetfeldschalters, erfolgen. Wird eine Ladeeinrichtung zur Aufladung des Energiespeicherelements 5 verwendet, könnte eine automatische Aktivierung der Kochhilfsvorrichtung 1 beispielsweise auch beim Entfernen aus dem Ladegerät erfolgen.

Im Ausführungsbeispiel ist das Kommunikationsmodul 3b ein Bluetooth 4.0 Modul. Dieses zeichnet sich durch einen geringen Stromverbrauch während des Betriebs aus. Auch der Einsatz anderer drahtloser Kommunikationsmodule ist denkbar. Neben der Kommunikation des Kommunikationsmoduls 3b mit der Empfangseinheit 23 ist es auch denkbar, dass das Kommunikationsmodul 3b auch einen Datenaustausch mit anderen elektronischen Geräten, wie z. B. Mobiltelefonen, Tablets oder anderen Geräte zum Darstellen der aktuell gemessenen Temperatur oder anderer Betriebszustände der Kochhilfsvorrichtung, ermöglicht. Um die Reichweite des Kommunikationsmoduls 3b zu erhöhen, ist es denkbar, dass bezogen auf den selbstaufgerichteten Zustand den die im Wasserbad schwimmende Kochhilfsvorrichtung 1 einnimmt, eine Antenne des Kommunikationsmoduls 3b im obersten Bereich der Kochhilfsvorrichtung angeordnet ist. Dies ist in den Figuren nicht gesondert dargestellt. Zweckmäßigerweise gewährleistet das Kommunikationsmodul 3b auch beim Betrieb der Kochhilfsvorrichtung 1 innerhalb von metallenen, gegebenenfalls durch einen Deckel verschlossenen, Kochgefäßen 21 eine zuverlässige Datenübertragung.

In Fig. 2 ist ein Beispiel für ein Sous-Vide Garen mit der Kochhilfsvorrichtung 1 gezeigt. Die Kochhilfsvorrichtung 1 schwimmt im Wasserbad 20, welches von einem als Kochtopf ausgebildeten Kochgefäß 21 ausgebildet ist. Das Kochgefäß 21 ist auf einem Glaskeramikfeld 26 der Kochstelle 22 mit einer Induktionsspule abgestellt. Mit dem Bedienelement 24 kann vom Endbenutzer eine Vorauswahl der gewünschten Wassertemperatur (= Stellgröße) für die Temperaturregelung getroffen werden. Die Empfangseinheit 23 der Kochstelle 22 empfängt Daten, insbesondere die gemessene Temperatur des Wasserbads 20, von der Kochhilfsvorrichtung 1 und liefert diese an den Heizregler 28, welcher die Stellgröße mit dem vom Temperaturfühler 2 gemessenen Temperaturwert des Wasserbads 20 vergleicht. Durch die Rückkoppelung der tatsächlich gemessenen Temperatur des Wasserbads mittels des Temperaturfühlers 2 der Kochhilfsvorrichtung 1 ist der Regelkreis geschlossen. Der Heizregler 28 steuert das Heizelement 25 (= Induktionsspule) entsprechend der Abweichung zwischen der gewünschten und der gemessenen Temperatur des Wasserbads 20 an.

Der Begriff Heizregler 28 ist weit zu fassen und umfasst auch entsprechende Treibermodule zur Ansteuerung des jeweiligen Heizelementes 25. Im Ausführungsbeispiel ist das Heizelement 25 eine Induktionsspule, mit welcher der Boden des Kochgefäßes 21 induktiv erwärmt wird. Wie bereits erläutert, kann das magnetische Streufeld der Wirbelströme, welches von der Induktionsspule des Heizelements 25 erzeugt wird, von der Kochhilfsvorrichtung 1 zur Gewinnung von elektrischem Strom herangezogen werden.

Neben der Übermittlung von Daten über die vom Temperaturfühler 2 der Kochhilfsvorrichtung 1 gemessene Temperatur ist es auch denkbar und möglich, dass Informationen über den Betriebszustand der Kochhilfsvorrichtung 1, z.B. über den Ladestand des Energiespeicherelements 5 oder kurzfristige Veränderungen der Temperatur, beispielsweise infolge der Berührung des Bodens des Kochgefäßes 21, an die Empfangseinheit 23 oder an andere elektronische Geräte übermittelt werden. Bei der Erfassung einer Berührung des Bodens des Kochgefäßes 21 könnte z.B. ein Ausschalten des Heizelements 25 und/oder die Ausgabe eines Signals, insbesondere eines Warntons, erfolgen.

Alternativ oder zusätzlich kann die elektronische Schaltungsanordnung 3 der Kochhilfsvorrichtung 1 selbst eine nicht gesondert dargestellte Signaleinrichtung aufweisen, welche bei kritischen Betriebszuständen einen Warnton erzeugt und/oder eine in die elektronische Schaltungsanordnung 3 integrierte Warnleuchte aktiviert.

Die Kochhilfsvorrichtung 1 kann, abweichend vom in Fig. 2 dargestellten Anwendungsfall, auch bei in anderer Art ausgebildeten Kochstellen 22, z.B. bei mit Gas betriebenen Heizelementen 25 oder Heizelementen 25 mit Widerstandsheizung verwendet werden.

Wie bereits erläutert kann eine erfindungsgemäße Kochhilfsvorrichtung 1 auch zur Messung der Temperatur des Bodens eines beispielsweise als Pfanne ausgebildeten Kochgefäßes 21 verwendet werden, vgl. Fig. 4. Aufgrund der bereits erläuterten Ausbildung der Kochhilfsvorrichtung 1 nach Art eines Stehaufmännchens kann die Kochhilfsvorrichtung 1 in einer beliebigen Lage auf dem Boden des Kochgefäßes 21 abgelegt werden und nimmt selbsttätig den selbstaufgerichteten Zustand ein.

Es ist denkbar und möglich, dass die Kochhilfsvorrichtung 1 einen Indikator aufweist, welcher eine Fehlanwendung (z. B. bei einem Einsatz der Kochhilfsvorrichtung bei über der zulässigen Betriebstemperatur liegenden Temperaturen) eine "Sollbruchstelle" bildet. Dadurch kann einer ungerechtfertigten Beanspruchung der Garantieleistung des Herstellers bei einer nicht bestimmungsgemäßen Verwendung der Kochhilfsvorrichtung 1 nachgewiesen werden. Derartige "Sollbruchstellen" im Sinne eines definierten Sicherheitsmerkmals zum Nachweis einer Überbeanspruchung der Kochhilfsvorrichtung 1 sind in anderen Bereichen bekannt.

Die Kochhilfsvorrichtung 1 hält günstigerweise einwirkenden Magnetfeldern eines Induktionskochfeldes beim unbeabsichtigten Ablegen der Kochhilfsvorrichtung 1 auf einem Induktionskochfeld stand.

Bei der gleichzeitigen Benutzung mehrerer Kochhilfsvorrichtungen 1 mit mehreren unterschiedlichen Wasserbädern 20 ist es denkbar und möglich, dass eine eindeutige Zuordnung der jeweiligen Kochhilfsvorrichtung 1 zur jeweiligen Empfangseinheit 23 und/oder zum jeweiligen Heizregler 28 erfolgt. Dadurch kann die Temperatur des Wasserbads 20 des jeweiligen Kochgefäßes dem jeweils zugehörigen Regelkreis zugeführt werden. Um die Zuordnung bzw. Paarung zu erleichtern, ist es denkbar, dass die optionale Signaleinheit der Kochhilfsvorrichtung 1 ein optisches, akustisches oder haptisches Feedback bei der Zuordnung der Kochhilfsvorrichtung 1 zum jeweiligen Regelkreis erzeugt.

### Legende

### zu den Hinweisziffern:

- 1: Kochhilfsvorrichtung
- 2: Temperaturfühler
- 3: elektronische Schaltungsanordnung
- 3a: Messwert-Erfassungs- und Verarbeitungsmodul
- 3b: Kommunikationsmodul
- 4: Längsachse
- 5: Energiespeicherelement
- 6: Zusatzgewicht
- 7: Ladespule
- 8: Wasserlinie
- 9: Gehäuse
- 10: Bewegungsrichtung
- 11: Bewegungsrichtung

- 20: Wasserbad
- 21: Kochgefäß
- 22: Kochstelle
- 23: Empfangseinheit
- 24: Bedienelement
- 25: Heizelement
- 26: Glaskeramikfeld
- 27: Wasserspiegel
- 28: Heizregler

## Patentansprüche

1. Kochhilfsvorrichtung (1) mit einem Temperaturfühler (2) und einer elektronischen Schaltungsanordnung (3), der ein Ausgabewert des Temperaturfühlers (2) zugeführt ist, wobei mittels des Temperaturfühlers (2) eine Temperatur eines von einer Kochstelle (22) aufheizbaren Wasserbads (20) erfassbar ist und von der elektronischen Schaltungsanordnung (3) Daten zur Regelung der Temperatur des Wasserbads (20) drahtlos an eine Empfangseinheit (23) übertragbar sind, und wobei die Kochhilfsvorrichtung (1) als selbstaufrichtender Schwimmer ausgebildet ist, **dadurch gekennzeichnet, dass** sich die elektronische Schaltungsanordnung (3) in einem selbstaufgerichteten Zustand der im Wasserbad (20) schwimmenden Kochhilfsvorrichtung (1) vollständig oberhalb der Wasserlinie (8) der Kochhilfsvorrichtung (1) befindet.

2. Kochhilfsvorrichtung (1) nach Anspruch 1, **dadurch gekennzeichnet, dass** sich die elektronische Schaltungsanordnung (3) im selbstaufgerichteten Zustand der im Wasserbad (20) schwimmenden Kochhilfsvorrichtung (1) in einem auf die vertikale Richtung bezogenen Abstand von mehr als 1 cm oberhalb der Wasserlinie (8) der Kochhilfsvorrichtung (1) befindet.

3. Kochhilfsvorrichtung (1) nach einem der Ansprüche 1 oder 2, **dadurch gekennzeichnet, dass** mittels des Temperaturfühlers (2) der Kochhilfsvorrichtung (1) auch die Temperatur eines von der Kochstelle (22) aufheizbaren Ölbads erfassbar ist, wobei sich die elektronische Schaltungsanordnung (3) im selbstaufgerichteten Zustand der im Ölbad schwimmenden Kochhilfsvorrichtung (1) vollständig oberhalb der Linie befindet, in der der Ölspiegel die äußere Oberfläche der Kochhilfsvorrichtung (1) berührt.

4. Kochhilfsvorrichtung (1) nach Anspruch 3, **dadurch gekennzeichnet, dass** sich die elektronische Schaltungsanordnung (3) im selbstaufgerichteten Zustand der im Ölbad schwimmenden Kochhilfsvorrichtung (1) in einem auf die vertikale Richtung bezogenen Abstand von mehr als 1 cm oberhalb der Linie befindet, in der der Ölspiegel die äußere Oberfläche der Kochhilfsvorrichtung (1) berührt.

5. Kochhilfsvorrichtung (1) nach einem der Ansprüche 1 bis 4, **dadurch gekennzeichnet, dass** die Kochhilfsvorrichtung (1) nach Art eines Stehaufmännchens ausgebildet ist.

6. Kochhilfsvorrichtung (1) nach Anspruch 5, **dadurch gekennzeichnet, dass** der Temperaturfühler (2) bezogen auf einen aufgerichteten Zustand, den die Kochhilfsvorrichtung (1) auf einer ebenen, horizontalen Unterlage einnimmt, an der Unterlage anliegt.

7. Kochhilfsvorrichtung (1) nach einem der Ansprüche 1 bis 6, **dadurch gekennzeichnet, dass** die Kochhilfsvorrichtung (1) zumindest ein Energiespeicherelement (5) aufweist.

8. Kochhilfsvorrichtung (1) nach Anspruch 7, **dadurch gekennzeichnet, dass** das Energiespeicherelement (5) ein aufladbarer Akkumulator oder ein Kondensator ist.

9. Kochhilfsvorrichtung (1) nach einem der Ansprüche 7 oder 8, **dadurch gekennzeichnet, dass** das Energiespeicherelement (5) eine vom Endbenutzer aus der Kochhilfsvorrichtung (1) entnehmbare und einsetzbare Batterie ist.

10. Kochhilfsvorrichtung (1) nach einem der Ansprüche 7 bis 9, **dadurch gekennzeichnet, dass** sich das Energiespeicherelement (5) im selbstaufgerichteten Zustand der im Wasserbad (20) schwimmenden Kochhilfsvorrichtung (1) oberhalb der Wasserlinie (8) der Kochhilfsvorrichtung (1) befindet.

11. Kochhilfsvorrichtung (1) nach einem der Ansprüche 7 bis 10, **dadurch gekennzeichnet, dass** sich das Energiespeicherelement (5) im selbstaufgerichteten Zustand einer in einem Ölbad schwimmenden Kochhilfsvorrichtung (1) oberhalb der Linie befindet, in der der Ölspiegel die äußere Oberfläche der Kochhilfsvorrichtung (1) berührt.

12. Kochhilfsvorrichtung (1) nach einem der Ansprüche 1 bis 11, **dadurch gekennzeichnet, dass** die Kochhilfsvorrichtung (1) eine Energy-Harvesting-Einrichtung zur Versorgung der elektronischen Schaltungsanordnung (3) und/oder eines Energiespeicherelements (5) der Kochhilfsvorrichtung (1) mit elektrischer Energie aufweist.

## Claims

1. Cooking assistance device (1) having a temperature sensor (2) and an electronic circuit arrangement (3) to which an output value from the temperature sensor (2) is fed, wherein a temperature of a water bath (20) able to be heated by a cooking means (22) can be sensed by means of the temperature sensor (2) and data for regulating the temperature of the water bath (20) can be transmitted wirelessly to a receiving unit (23) by the electronic circuit arrangement (3), and wherein the cooking assistance device (1) takes the form of a self-righting float, **characterised in that**, when the cooking assistance device (1) floating in the water bath (20) is in a self-righted state, the electronic circuit arrangement (3) is situated entirely above the water line (8) of the cooking assistance device (1).

2. Cooking assistance device (1) according to claim 1, **characterised in that**, when the cooking assistance device (1) floating in the water bath (20) is in the self-righted state, the electronic circuit arrangement (3) is situated at a distance of more than 1 cm in the vertical direction above the water line (8) of the cooking assistance device (1).

3. Cooking assistance device (1) according to either of claims 1 and 2, **characterised in that** the temperature of an oil bath able to be heated by the cooking means (22) is also able to be sensed by means of the temperature sensor (2) of the cooking assistance device (1), the electronic circuit arrangement (3) being situated, when the cooking assistance device (1) floating in the oil bath is in the self-righted state, entirely above the line along which the oil level is in contact with the outer surface of the cooking assistance device (1).

4. Cooking assistance device (1) according to claim 3, **characterised in that**, when the cooking assistance device (1) floating in the oil bath is in the self-righted state, the electronic circuit arrangement (3) is situated at a distance of more than 1 cm in the vertical direction above the line along which the oil level is in contact with the outer surface of the cooking assistance device (1).

5. Cooking assistance device (1) according to one of claims 1 to 4, **characterised in that** the cooking assistance device (1) is of a type similar to a roly-poly toy.

6. Cooking assistance device (1) according to claim 5, **characterised in that**, when the cooking assistance device (1) is in a self-righted state which it assumes on a level horizontal supporting surface, the temperature sensor (2) rests against the supporting surface.

7. Cooking assistance device (1) according to one of claims 1 to 6, **characterised in that** the cooking assistance device (1) has at least one energy-storing member (5).

8. Cooking assistance device (1) according to claim 7, **characterised in that** the energy-storing member (5) is a rechargeable storage battery or a capacitor.

9. Cooking assistance device (1) according to either of claims 7 and 8, **characterised in that** the energy-storing member (5) is a battery able to be removed from the cooking assistance device (1) and inserted therein by the end user.

10. Cooking assistance device (1) according to one of claims 7 to 9, **characterised in that**, when the cooking assistance device (1) floating in the water bath (20) is in the self-righted state, the energy-storing member (5) is situated above the water line (8) of the cooking assistance device (1).

11. Cooking assistance device (1) according to one of claims 7 to 10, **characterised in that**, when a cooking assistance device (1) floating in an oil bath is in the self-righted state, the energy-storing member (5) is situated above the line along which the oil level is in contact with the outer surface of the cooking assistance device (1)

12. Cooking assistance device (1) according to one of claims 1 to 11, **characterised in that** the cooking assistance device (1) has an energy-harvesting means for supplying the electronic circuit arrangement (3) of the cooking assistance device (1) and/or an energy-storing member (5) thereof with electrical energy.

## Revendications

1. Dispositif d'aide à la cuisson (1) comprenant un capteur de température (2) et un circuit électronique (3), auquel est transmise une valeur de sortie du capteur de température (2), lequel capteur de température (2) peut mesurer une température d'un bain-marie (20) pouvant être chauffé par un poste de cuisson (22), et des données destinées à réguler la température du bain-marie (20) pouvant être transmises sans fil à une unité de réception (23) par le circuit électronique (3), et le dispositif d'aide à la cuisson (1) étant réalisé sous la forme d'un flotteur à redressement automatique, **caractérisé en ce que**, lorsque le dispositif d'aide à la cuisson (1) flottant dans le bain-marie (20) se trouve dans un état redressé automatiquement, le circuit électronique (3) se situe entièrement au-dessus de la ligne de flottaison (8) du dispositif d'aide à la cuisson (1).

2. Dispositif d'aide à la cuisson (1) selon la revendication 1, **caractérisé en ce que,** lorsque le dispositif d'aide à la cuisson (1) flottant dans le bain-marie (20) se trouve dans l'état redressé automatiquement, le circuit électronique (3) se situe à une distance, rapportée à la direction verticale, de plus de 1 cm au-dessus de la ligne de flottaison (8) du dispositif d'aide à la cuisson (1).

3. Dispositif d'aide à la cuisson (1) selon l'une des revendications 1 ou 2, **caractérisé en ce que** la température d'un bain d'huile pouvant être chauffé par le poste de cuisson (22) peut également être mesurée au moyen du capteur de température (2) du dispositif d'aide à la cuisson (1), le circuit électronique (3), lorsque le dispositif d'aide à la cuisson (1) flottant dans le bain d'huile se trouve à l'état redressé automatiquement, se situant entièrement au-dessus de la ligne où le niveau d'huile touche la surface extérieure du dispositif d'aide à la cuisson (1).

4. Dispositif d'aide à la cuisson (1) selon la revendication 3, **caractérisé en ce que,** lorsque le dispositif d'aide à la cuisson (1) flottant dans le bain d'huile se trouve à l'état redressé automatiquement, le circuit électronique (3) se situe à une distance, rapportée à la direction verticale, de plus de 1 cm au-dessus de la ligne où le niveau d'huile touche la surface extérieure du dispositif d'aide à la cuisson (1).

5. Dispositif d'aide à la cuisson (1) selon l'une des revendications 1 à 4, **caractérisé en ce que** le dispositif d'aide à la cuisson (1) est réalisé à la façon d'un culbuto.

6. Dispositif d'aide à la cuisson (1) selon la revendication 5, **caractérisé en ce que** le capteur de température (2), rapporté à un état redressé que le dispositif d'aide à la cuisson (1) occupe sur un support horizontal plat, s'applique contre ledit support.

7. Dispositif d'aide à la cuisson (1) selon l'une des revendications 1 à 6, **caractérisé en ce que** le dispositif d'aide à la cuisson (1) comprend au moins un élément accumulateur d'énergie (5).

8. Dispositif d'aide à la cuisson (1) selon la revendication 7, **caractérisé en ce que** l'élément accumulateur d'énergie (5) est un accumulateur rechargeable ou un condensateur.

9. Dispositif d'aide à la cuisson (1) selon l'une des revendications 7 ou 8, **caractérisé en ce que** l'élément accumulateur d'énergie (5) est une batterie pouvant être retirée du dispositif d'aide à la cuisson (1) par l'utilisateur final et y être insérée.

10. Dispositif d'aide à la cuisson (1) selon l'une des revendications 7 à 9, **caractérisé en ce que,** lorsque le dispositif d'aide à la cuisson (1) flottant dans le bain-marie (20) se trouve à l'état redressé automatiquement, l'élément accumulateur d'énergie (5) se situe au-dessus de la ligne de flottaison (8) du dispositif d'aide à la cuisson (1).

11. Dispositif d'aide à la cuisson (1) selon l'une des revendications 7 à 10, **caractérisé en ce que,** lorsque le dispositif d'aide à la cuisson (1) flottant dans un bain d'huile se trouve à l'état redressé automatiquement, l'élément accumulateur d'énergie (5) se situe au-dessus de la ligne où le niveau d'huile touche la surface extérieure du dispositif d'aide à la cuisson (1).

12. Dispositif d'aide à la cuisson (1) selon l'une des revendications 1 à 11, **caractérisé en ce que** le dispositif d'aide à la cuisson (1) comprend un dispositif récupérateur d'énergie destiné à alimenter en énergie électrique le circuit électronique (3) et/ou un élément accumulateur d'énergie (5) du dispositif d'aide à la cuisson (1).
